Europäisches Patentamt

European Patent Office

Office européen des brevets

(19)

(11) Veröffentlichungsnummer: **0 158 289**
**B1**

# (12) EUROPÄISCHE PATENTSCHRIFT

(45) Veröffentlichungstag der Patentschrift: **11.07.90**

(51) Int. Cl.⁵: **G 01 N 29/04**

(21) Anmeldenummer: **85104112.9**

(22) Anmeldetag: **09.04.85**

(54) Vorrichtung zur Prüfung von elektrisch leitenden Gegenständen mittels Ultraschall.

(30) Priorität: **12.04.84 DE 3413787**

(43) Veröffentlichungstag der Anmeldung:
**16.10.85 Patentblatt 85/42**

(45) Bekanntmachung des Hinweises auf die
Patenterteilung:
**11.07.90 Patentblatt 90/28**

(84) Benannte Vertragsstaaten:
**DE FR GB IT NL SE**

(56) Entgegenhaltungen:
**EP-A-0 024 707**
**EP-A-0 051 758**
**US-A-3 555 887**

**PATENT ABSTRACTS OF JAPAN, Band 7, Nr.
188 (P-217)1333r, 17. August 1983; & JP-A-58 88
653 (NIPPON KOKAN K.K.) 26-05-1983**

(73) Patentinhaber: **Nukem GmbH
Rodenbacher Chaussee 6 Postfach 11 00 80
D-6450 Hanau 11 (DE)**

(72) Erfinder: **Hüschelrath, Gerhard, Dr.
Beethovenstrasse 6
D-8752 Laufach (DE)**

(74) Vertreter: **Stoffregen, Hans-Herbert, Dr. Dipl.-
Phys.
Salzstrasse 11a
D-6450 Hanau/Main 1 (DE)**

Courier Press, Leamington Spa, England.

## Beschreibung

Die Erfindung bezieht sich auf eine Vorrichtung zur zerstörungsfreien Fehlerprüfung von elektrisch leitenden Gegenständen durch elektrodynamisch erzeugte Ultraschallwellen mit einem Magneten, der ein stationäres Magnetfeld erzeugt und mit je einem Pol jeder von zwei Oberflächen des zu prüfenden Gegenstands gegenübersteht, die sich auf zwei einander entgegengesetzten Seiten des Gegenstands befinden, wobei zwischen dem einen Pol und einer der beiden Oberflächen eine Sendesonde und zwischen dem anderen Pol und der anderen Oberfläche eine Empfangssonde angeordnet ist.

Eine Vorrichtung der vorstehend beschriebenen Gattung ist bereits aus der EP—A—0 051 758 bekannt. Diese Druckschrift zeigt in der Zeichnung einen elektrodynamischen Ultraschallwandler, dessen Sonden auf gegenüberliegenden Seiten eines zu prüfenden Gegenstandes angeordnet sind, jedoch ist in keiner Weise eine realistische Möglichkeit angedeutet, im Durchschallungsverfahren Fehler im Werkstück hinreichendgenau zu ermitteln. Vielmehr sollte an Hand der in bezug auf den zu prüfenden Gegenstand stationär angeordneten Sonden, deren Aufbau und die dabei verwendeten Materialien beispielhaft erläutert werden.

In den Sendesonden elektrodynamischer Wandler werden hochfrequente Wechselströme hervorgerufen, die in den leitenden Gegenständen Wirbelströme induzieren. Auf die von Wirbelströmen durchflossene Prüflingsoberfläche wirkt eine durch Wechselwirkung mit einem Magnetfeld ausgehende Kraft ein. Dabei werden elektrodynamische Ultraschallwellen erregt. Zur Induzierung der Wechselströme werden häufig flache Spiralspulen verwendet. Die Ultraschallamplituden hängen vom Abstand der Sendespulen von der Oberfläche des Gegenstandes ab. Mit zunehmendem Abstand zwischen Sendespule und Prüflingsoberfläche gehen die Amplituden stark zurück. Zum Empfang der Ultraschallwellen werden Spulen verwendet, die in einem Magnetfeld angeordnet sind. Die in der Empfangsspule induzierte Spannung hat die gleiche Frequenz wie die Ultraschallschwingung. Der Wirkungsgrad der Umwandlung von elektrischer in akustische Energie und umgekehrt ist gering.

Bekannt ist auch eine Vorrichtung zur zerstörungsfreien Prüfung von elektrisch leitenden Gegenständen, die mit elektrodynamisch erzeugten Ultraschallwellen nach dem Echoprinzip geprüft werden. Die Pole eines Elektromagneten mit einem dreischenkligen Kern sind bei der bekannten Vorrichtung gegenüber der gleichen Seite eines zu prüfenden Gegenstands angeordnet. Der Elektromagnet erzeugt im jeweils zu prüfenden Gegenstand ein konstantes Magnetfeld. Zwischen dem mittleren Pol und der Oberfläche des Gegenstands sind eine Sendesonde und eine Empfangssonde nebeneinander angeordnet. Die von der Sendesonde im Gegenstand elektrodynamisch erzeugten Ultraschallwellen durchlaufen den Gegenstand und werden an der anderen Seitereflektiert. Ultraschallwellen, die unter einem von 90° verschiedenen Winkel reflektiert werden, gelangen zu der Stelle der Oberfläche, die der Empfängersonde gegenüberliegt, in der sie elektrische Signale induzieren. Mit der nach dem Echoprinzip arbeitenden Vorrichtung können Fehler und/oder Wanddicken gemessen werden. Da der von den Ultraschallwellen zwischen der Sendestelle und der Empfängerstelle zurückgelegte Weg größer als die doppelte Wanddicke ist, lassen sich Wanddicken nur ungenau erfassen (US—A—3 555 887). Mit dieser bekannten Vorrichtung sollen Schwierigkeiten vermieden werden, die sich bei der Ankopplung beispielsweise piezoelektrischer Sonden an die Prüflingsoberflächen mittels Wasserbädern oder anderen Ankopplungsmitteln ergeben.

Der Erfindung liegt die Aufgabe zugrunde, eine Vorrichtung der eingangs beschriebenen Gattung derart weiterzuentwickeln, daß bei der Durchschallungsprüfung Fehler von Gegenständen, deren Oberflächen gegenüber den Abmessungen der Sende- und Empfangssonde groß sind, durch elektrodynamische Anregung hinreichend genau ermittelt werden.

Die Aufgabe wird erfindungsgemäß dadurch gelöst, daß der Magnet im Gegenstand während der Prüfung eine konstante Magnetfeldstärke erzeugt, daß die Sende- und Empfangssonde gegenüber der jeweiligen Oberfläche des Gegenstands einen kleinen, gleichbleibenden oder nahezu gleichbleibenden Abstand haben und in Haltern angeordnet sind, mit denen sie oszillierend über die Oberflächen des Gegenstands bewegbar sind, und daß der Empfangssonde ein Fehlerdetektor und ein Wanddickenmeßgerät nachgeschaltet sind, das ein der, Wanddicke proportionales Ausgangssignal erzeugt, das eine Einstellschaltung beaufschlagt, mit der ein Ansprechschwellenwert des Fehlerdetektors in Abahängigkeit von der Wanddicke veränderbar ist.

Durch diese Maßnahmen wird der Einfluß des Abstandes zwischen der Oberfläche des Gegenstandes un den beiden Sonden auf das Meßsignal erheblich vermindert. Bei der Durchschallung mittels elektrodynamischer Anregung fällt die Wanddickenmessung ohne weitere Sonden mit an, da der Ultraschall erst an der Oberfläche des Prüflings erzeugt und auch wieder detektiert wird. Dieses macht man sich erfingungsgemäß zu Nutzen, die Echosignale über die bekannte Ultraschalldämpfung im Gegenstand zu korrigieren. Dadurch fällt die Wanddickenvariation als Störer bei der Durchschallung weg.

Im Prüfling können auf die oben beschriebene Weise zum Beispiel Risse, Lunker usw. im Durchschallungsverfahren festgestellt werden. Eine Schrägstellung zwischen den Ultraschallsonden und den zu prüfenden Gegenständen wirkt sich nicht störend auf die Meßsignale aus. Daher hat die Vorrichtung in dieser Hinsicht einen wesentlichen Vorteil gegenüber Ultraschallschwingern, die durch Wasserbäder an Prüflinge angekoppelt sind. Bei der Wasserankopplung ruft eine Schrägstellung des Prüflings eine Änderung des Einschallwinkels hervor, wodurch sich Störsignale ergeben.

Vorzugsweise wird die magnetische Induktion im Luftspalt des Magneten, in den der Gegenstand geprüft wird, auf einen Wert von 1 Tesla (10 kGauß) oder auf höhere Werte eingestellt.

Ausgestaltungen der Sondenhalterung bzw. der Magnetenbildung sind den Ansprüchen 3—7 zu entnehmen.

Weitere Einzelheiten, Vorteile und Merkmale der Erfindung ergeben sich aus der nachfolgenden Beschreibung eines in einer Zeichnung dargestellten Ausführungsbeispiels:

Es zeigen:

Fig. 1 eine Ansicht einer Vorrichtung zur Prüfung von elektrisch leitenden Gegenständen mittels Ultraschall von vorne.

Fig. 2 die in Fig. 1 dargestellte Vorrichtung von oben,

Fig. 3 Einzelheiten der in Fig. 1 dargestellten Vorrichtung im Querschnitt,

Fig. 4 eine Schaltungsanordnung zur Erzeugung und Verarbeitung von Prüfsignale und

Fig. 5 einen Halter für einen Empfangswandler in Seitenansicht.

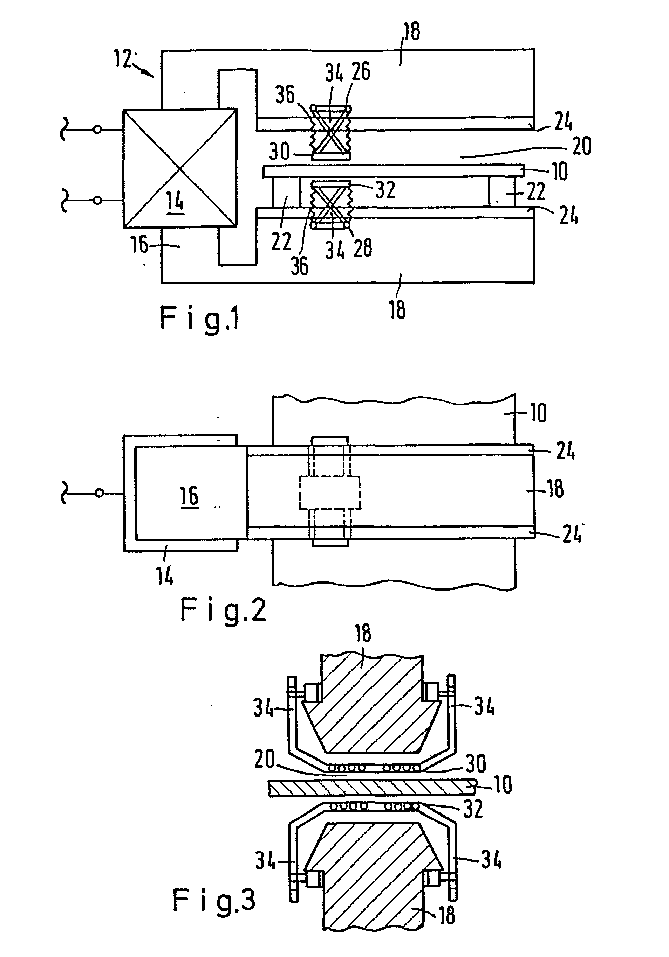

Eine Vorrichtung zur zerstörungsfreien Prüfung von elektrisch leitenden Gegenständen 10, von denen in den Fig. 1 bis 4 jeweils einer dargestellt ist, weist einen Elektromagneten 12 auf, der ein mit einer Spule 14 versehenes Joch 16 und zwei Schenkel 18 enthält. Die Schenkel 18 verlaufen über eine längere Strecke parallel zueinander und lassen einen Luftspalt 20 frei, durch den der zu prüfende Gegenstand 10, zum Beispiel ein Eisenblech, hindurchbewegt wird.

Der Gegenstand 10 kann auf Rollen 22 transportiert werden. Die Schenkel 18 weisen auf ihren, dem Luftspalt 20 zugewandten Seiten schienenförmig ausgebildete Vorsprünge 24 auf, die sich über die gesamte Länge der Schenkel 18 erstrecken.

Auf den schienenförmigen Vorsprüngen 24 sind Halter 26, 28 angeordnet, die jeweils eine Sendesonde 30 und eine Empfangssonde 32 für Ultraschallwellen tragen. Bei der Sende- und der Empfangssonde 30, 32 handelt es sich um Spulen, die von Sende- oder Empfangsströmen beaufschlagt werden. Die Sende- und Empfangssonde 30, 32 befinden sich im Luftspalt 20. Die Sendesonde 30 ist auf einer Seite des Gegenstandes 10 im kleinen Abstand von dessen Oberfläche angeordnet, während die Empfangssonde 32 der anderen Seite des Gegenstandes 10 im kurzen Abstand gegenübersteht. Die Halter 26, 28 weisen unten eingehender beschriebene, auf schienenartigen Vorsprüngen 24 geführte Rollen auf, mit denen gekreuzte Tragstäbe 34 verbunden sind, an deren Enden jeweils die Sende- oder Empfangssonde 30, 32 befestigt ist. Über die Tragstäbe 34 läßt sich der Abstand zwischen der Oberfläche des Gegenstandes 10 und der Sende- bzw. Empfangssonde 30, 32 einstellen. Die Sendesonde 30 und die Empfangssonde 32 werden durch Federn 36 in ihrer jeweiligen Position gehalten.

Mit dem Elektromagneten 12 wird im Luftspalt 20 ein stationäres Magnetfeld erzeugt, das eine gleichbleibende Feldstärke hat. Der Gegenstand 10 kann para-, dia- oder ferromagnetisch sein. Bei para- und diamagnetischen Gegenständen 10 sind die gleichen Feldstärken und Durchflutungen aufzubringen, um Ultraschallwellen einer bestimmten Amplitude zu erzeugen, wie bei ferromagnetischen Gegenständen. Die Erregerwicklung des Magneten ist so auszulegen, daß Feldstärkeverluste durch die Scherung der Hysteresekurve kompensiert werden können.

Die Sendesonde 30 ist an einen Sender 38 für hochfrequente Wechselströme angeschlossen. Die in der Spule der Sendesonde 30 fließenden hochfrequenten Wechselströme induzieren im Gegenstand 10 hochfrequente Wirbelströme, auf die das vom Elektromagneten erzeugte Magnetfeld einwirkt. Unter dem Einfluß des Magnetfeldes bzw. der an der Oberfläche des Gegenstandes 10 herrschenden magnetischen Induktion rufen die Wirbelströme Ultraschallwellen hervor, die sich im Gegenstand 10 fortpflanzen. Da der Vektor des Magnetfeldes senkrecht zur Oberfläche des Gegenstandes 10 verläuft, entstehen Transversalwellen, deren Frequenz mit derjenigen der Ströme in der Sendesonde 30 übereinstimmt.

Die transversalen Ultraschallwellen werden auf der gegenüberliegenden Seite des Gegenstandes 10 unter dem Einfluß des Magnetfeldes in Wirbelströme umgewandelt, die in Empfangssonde 32 Spannungen induzieren, die dem Eingang eines Empfängers 40 zugeführt werden. Die Empfangssonde 32 steht in geringem gleichbleibendem Abstand der Oberfläche des Gegenstandes 10 gegenüber. Um in Bezug auf die Oberfläche des Gegenstandes 10 einen möglichst gleichbleibenden Abstand einzuhalten, ist es -wie erwähnt- zweckmäßig, die Empfangssonde 32 mit Federkraft gegen die Oberfläche anzudrükken. Gleiches gilt für die Sendesonde 30. Damit lassen sich Störsignale, die durch Abstandsänderungen entstehen, vermeiden.

Dem Empfänger 40, der eine Verstärkung der empfangenen Signale von etwa 30 db hervorruft, ist ein Wanddickenmeßgerät 42 und eine Fehlerdetektor 44 nachgeschaltet, der ein Ausgangssignal abgibt, wenn das Eingangssignal einen voreinstellbaren Schwellwert überschreitet. Der Schwellwert läßt sich mittels einer Einstellschaltung 46 verändern, die vom Ausgangssignale des Wanddickenmeßgerätes 42 gesteuert wird. Dem Fehlerdetektor 46 ist zweckmäßigerweise ein nicht dargestelltes Sichtgerät nachgeschaltet.

Der Empfänger 40, das Wanddickenmeßgerät 42, der Fehlerdetektor 44 und die Einstellschaltung 46 sind vorzugsweise als Einschübe ausgebildet, die mit dem Sichtgerät und einem Stromversorgungsgerät für den Elektromagneten 12 in einem Rahmen montiert sind. Als Empfänger 40, Wanddickenmeßgerät 42, Fehlerdetektor 44 und Einstellschaltung 46 können zweckmäßigerweise die von der Firma NUKEM GmbH, 6450 Hanau/Main 11, unter den Typen FDW-01, UL-20, SE-03, M-01/S-01, Z-01 hergestellten Geräte verwendet werden.

Die Tragstäbe 34 sind jeweils an einem Ende durch Drehachsen 50 mit der Sendesonde 30 oder Empfangssonde 32 verbunden. Bei der Sende- und Empfangssonde handelt es sich jeweils um Spulen. Ein Tragstab 34 ist mit seinem anderen Ende mit einer Drehachse 51 an einem Schlitten 47 angelenkt, der Rollen 48 enthält, die auf den schienenartigen Vorsprüngen 24 geführt sind. Der andere Tragstab 34 ist mit seinem zweiten Ende an einer weiteren Rolle 49 angelenkt, die in einer Nut 53 längsverschiebbar angeordnet ist. Die Nut 53 erstreckt sich in Längsrichtung des Schlittens 47. Die nicht näher bezeichnete Achse der Rolle 49 ist mit einem Ende einer Feder 52 verbunden, deren anderes Ende nahe an der Drehachse 51 eingespannt ist. Die Feder 49 übt daher auf die Rolle 49 eine Zugkraft aus, die in etwa gegen die Drehachse 51 gerichtet ist. In der Nut 53 ist ein Anschlag 54 verschiebbar angeordnet, der eine nicht näher bezeichnete Feststellschraube hat.

Die Feder 52 zieht die Rolle 49 bis zu dem Anschlag 54. Über die Stellung des Anschlages 54 in der Nut 53 läßt sich der Abstand zwischen den Enden der Tragstäbe 34 und damit die Öffnungswinkel zwischen den Tragstäben 34 auf einen gewünschten Wert einstellen. Durch eine entsprechende Einstellung des Anschlags wird demnach der Abstand der Empfangssonde 32 von der Oberfläche des Gegenstandes 10 genau festgelegt. Die Befestigung an den Tragstäben 34 verhindert das Verkanten der Empfangssondes 32. Die Abstände können aus sehr kleine Werte eingestellt werden. Selbst wenn die Empfangssonde 32 die Oberfläche des Gegenstandes 10 berührt, stört dies nicht die Verschiebebewegung längs der Oberfläche des Gegenstandes, da durch eine Dehnung der Feder die Empfangssonde 32 in Richtung der schienenartigen Vorsprünge 24 ausgelenkt werden kann. Der Anschlag 54 kann sogar bei einer entsprechend robust ausgebildeten Sende- bzw. Empfangssonde so eingestellt werden, daß jeweils die Sende- bzw. Empfangssonde 30, 32 die Oberfläche des Gegenstandes 10 leicht berührt, wenn dies für die Feststellung bestimmter Fehler oder Wandstärken notwendig sein sollte, um ein hohes Nutz-Störsignalverhältnis zu erhalten. Hierzu eignen sich vor allem Gegenstände mit glatter Oberfläche.

Mit der Sende- und der Empfangssonde 30, 32 wird eine Durchschallungsprüfung des Gegenstandes 10 durchgeführt. Um die verschiedenen Abschnitte des breiten Gegenstandes 10 erfassen zu können, werden die Sende- und der Empfangssonde 30, 32 nacheinander durch eine Verschiebung der Halter 26 in verschiedene Positionen gebracht, in denen eine vollständige Prüfung des Gegenstandes 10 über dessen gesamte Breite möglich ist. Danach wird der Gegenstand 10 um einen Schritt, der der Größe einer Prüfzone entspricht, weiterbewegt. Sodann wird wiederum die Prüfung in Richtung der Breite des Gegenstandes 10 durchgeführt, wobei der Sende- und der Empfangswandler 30, 32 in benachbarte Positionen längs der schienenartigen Vorsprünge bewegt werden. In diesen Positionen werden dann Durchschallungsprüfungen vorgenommen, indem der Sender 38 hochfrequente Wechselströme in die Sendesonde 30 einspeist, während die von der Sendesonde 30 in Verbindung mit dem Magnetfeld erzeugten Ultraschallwellen in der Empfangssonde 32 hochfrequente Spannungen erzeugen, die zur Wanddickenfeststellung und zur Fehlererfassung ausgewertet werden.

Das Wanddickenmeßgerät 42 stellt aus der Laufzeit der Ultraschallwellen von einer Oberfläche des Gegenstandes 10 zur anderen Oberfläche die Wanddicke fest und erzeugt ein dieser Wanddicke proportionales Ausgangssignal. Dieses der Wanddicke proportionale Signal läßt sich ohne die Verwendung zusätzlicher Sonden erzeugen. Die Dämpfung der Ultraschallsignale im Gegenstand 10 hängt stark von der Wanddicke ab. Um nicht eine von der Änderung der Wanddicke herrührende Beeinflussung der empfangenen Signale fälschlich als Fehler im Material zu interpretieren, wird der Einfluß der Wanddicke durch eine Anpassung des für die Fehlererkennung maßgebenden Schwellenwertes im Fehlerdetektor beseitigt. Wanddickenänderungen können daher nicht mehr als Störsignale die Meßwerte verfälschen.

Der Fehlerdetektor 44 stellt die absolute Signalhöhe des ersten oder mehrerer Echosignale fest, vergleicht sie mit dem eingestellten Schwellwert und meldet am Ausgang eine Unter- bzw. Überschreitung als Fehler. Der Schwellwert wird aus der Wanddicke und der bekannten Dämpfung der Ultraschallsignale im fehlerfreien Gegenstand bestimmt. Wenn eine schnelle Prüfung der jeweiligen Gegenstände 10 verlangt wird, können auch mehrere Sende-, Empfangssonden 30, 32 nebeneinander verwendet werden.

Von großer Bedeutung ist eine gleichbleibende relative magnetische Induktion bezogen auf den Wert der Referenzmessung im Oberflächenbereich des zu prüfenden Gegenstandes 10. Unter der Voraussetzung, daß der Elektromagnet 12 ein Magnetfeld mit konstanter Feldstärke im Luftspalt 20 erzeugt, wird die vorstehend erläuterte Bedingung bei dia- und paramagnetischen Gegenständen 10 auf einfache Weise unabhängig von der Wanddicke erreicht, indem der Abstand zwischen den Schenkeln 18 gleich groß gehalten wird. Lediglich der Abstand zwischen den Sende- und der Empfangssonden 30, 32 ist auf die jeweilige Wanddicke des Gegenstandes 10 einzustellen.

Die absolute Magnetfeldstärke darf von Meßaufgabe zu Meßaufgabe schwanken, da die Meßparameter geeicht werden. Wichtig ist, daß die relative Magnetfeldstärke während einer Messung nicht schwanken kann. Ändert sich der Luftspalt nur durch Dickenvariation des Prüflings, erkennt dies der Wanddickenmeßkanal.

Bei ferromagnetischen Gegenständen wird eine gleichbleibende relative magnetische Induktion im Oberflächenbereich im Falle von großen, unterschiedlichen Wanddicken durch eine Anpassung des Luftspalts 20 mittels Zwischenstücken erreicht. Es wird die Stärke des Luftspaltes 20, d.h. der in Luft verlaufende Abstand zwischen den Schenkeln 18 unabhängig von der Wanddicke der Gegenstände etwa konstant gehalten. Die Einstellung des Abstandes von Sende- und Empfangssonde 30, 32 auf die jeweilige Wanddicke des zu prüfenden Gegenstandes ist ebenfalls erforderlich. Die Verschiebung des Gegenstandes 10 in Richtung der Schenkel 18 und gegebenenfalls eine Schrägstellung führen nicht zu einer Meßwertverfälschung.

Die oben beschriebene Vorrichtung läßt sich vorteilhafterweise für die Durchschallungsprüfung von Gegenständen 10 mit Wänden verwenden, die wenigstens über größere Abschnitte eine gleichbleibende Wandstärke haben. Es können zu Beispiel Platten, Bahnen, Bänder und Rohre auf Fehler an der Oberfläche und im Inneren der Wand geprüft werden.

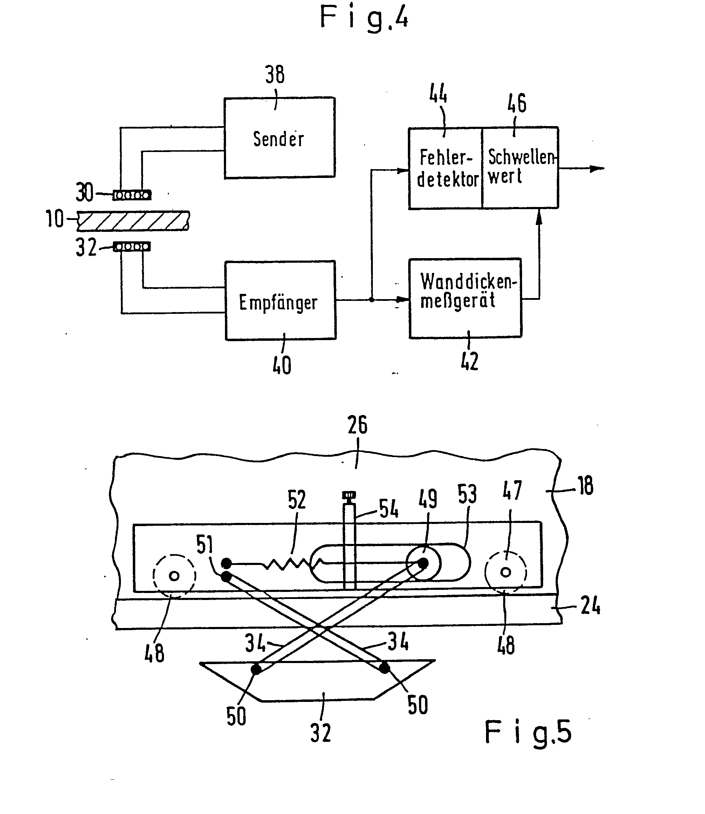

Die in Fig. 4 dargestellte Schaltungsanordnung wird durch Gegenstände geeicht, die genau bekannte Abmessungen haben. Die bei der Prüfung von Gegenständen erhaltenen Werte beziehen sich dann auf die von den geeichten Gegenständen erzeugten Werte.

**Patentansprüche**

1. Vorrichtung zur zerstörungsfreien Fehlerprüfung von elektrisch leitenden Gegenständen (10) durch elektrodynamisch erzeugte Ultraschallwellen mit einem Magneten (12), der ein stationäres Magnetfeld erzeugt und mit je einem Pol jeder von zwei Oberflächen des zu prüfenden Gegenstands gegenübersteht, die sich auf zwei einander entgegengesetzten Seiten des Gegenstands befinden, wobei zwischen dem einen Pol und einer der beiden Oberflächen eine Sendesonde (30) und zwischen dem anderen Pol und der anderen Oberfläche eine Empfangssonde (32) angeordnet ist, dadurch gekennzeichnet, daß der Magnet im Gegenstand während der Prüfung eine konstante Magnetfeldstärke erzeugt, daß die Sende- und die Empfangssonde (30, 32) gegenüber der jeweiligen Oberfläche des Gegenstands (10) einen kleinen, gleichbleibenden oder nahezu gleichbleibenden Abstand haben und in Haltern (26, 28) angeordnet sind, mit denen oszillierend über die Oberflächen des Gegenstands (10) bewegbar sind, und daß der Empfangssonde (32) ein Fehlerdetektor (44) und ein Wanddickenmeßgerät (42) nachgeschaltet sind, das ein der Wanddicke proportionales Ausgangssignal erzeugt, das eine Einstellschaltung (46) beaufschlagt, mit der ein Ansprechschwellenwert des Fehlerdetektors (44) in Abhängigkeit von der Wanddicke veränderbar ist.

2. Vorrichtung nach Anspruch 1, dadurch gekennzeichnet, daß die magnetische Induktion im Luftspalt zwischen den Polen (18) des Magneten (12) gleich oder größer als ein Tesla (zehn kGauß) ist.

3. Vorrichtung nach Anspruch 1, dadurch gekennzeichnet, daß wenigstens die Empfangssonde (32) mittels Federkraft an die Oberfläche des jeweils zu prüfenden Gegenstandes (10) andrückbar ist.

4. Vorrichtung nach Anspruch 1, dadurch gekennzeichnet, daß wenigstens die Empfangssonde (32) unter Federvorspannung auf einen kleinen Abstand zu der Oberfläche des Gegenstandes (10) einstellbar ist.

5. Vorrichtung nach Anspruch 2, dadurch gekennzeichnet, daß wenigstens die Empfangssonde (32) an den Ende scherenförmig gekreuzter Tragstäbe (34) befestigt ist, deren andere Enden mit einem längs einer Führung (53) verschiebbaren Schlitten (47) verbunden sind, wobei einer der Tragstäbe (34) mit einem Ende schwenkbar am Schlitten (47) gelagert ist, während der andere Tragstab (34) mit seinem einen Ende im Schlitten in dessen Längsrichtung verschiebbar angeordnet und von einer auf den ersten Tragstab hin gerichteten Federspannung beaufschlagt ist.

6. Vorrichtung nach Anspruch 5, dadurch gekennzeichnet, daß im Verschiebeweg des Endes des Tragstabes (34) ein auf unterschiedliche Abstände zum Ende des anderen Tragstabes einstellbarer Anschlag (54) angeordnet ist.

7. Vorrichtung nach Anspruch 1, dadurch gekennzeichnet, daß als Magnet (12) ein Elektromagnet vorgesehen ist, der zwei durch ein Joch (16) miteinander verbundene Schenkel (18) aufweist, wobei durch Einlagen zwischen dem Joch und den Schenkeln der Abstand zwischen den Polen und der Oberfläche der jeweiligen Gegenstände (10) einstellbar ist.

**Revendications**

1. Dispositif de contrôle non destructif de défauts d'objets (10) conduisant le courant électrique au moyen d'ondes à ultrasons produites électrodynamiquement par un aimant (12) qui produit un champ magnétique stationnaire et dont chaque pôle se trouve en regard d'une de deux surfaces de l'objet à contrôler, lesquelles se trouvent sur deux faces opposées de l'objet, cependant qu'une sonde émettrice (30) est disposée entre un des pôles et une des deux surfaces et une sonde réceptrice (32) entre l'autre pôle et l'autre surface, caractérisé en ce que: l'aimant produit dans l'objet pendant le contrôle un champ magnétique d'intensité constante, de manière telle que les sondes émettrice et réceptrice (30, 32) ont, par rapport à la surface considérée de l'objet (10), une distance constante ou presque constante et sont disposées dans des supports (26, 28) au moyen desquels elles peuvent se déplacer en oscillant au-dessus des surfaces de l'objet (10), et en ce qu'un détecteur de défauts (44) et un appareil de mesure d'épaisseur de paroi (42) sont montés à la suite de la sonde réceptrice (32), lequel appareil émet un signal de sortie proptionnel à l'épaisseur de paroi, qui est répercuté à un circuit de réglage (46) qui permet de modifier une valeur de seuil de réponse du détecteur de défauts (44) en fonction de l'épaisseur de paroi.

2. Dispositif selon la revendication 1, caractérisé en ce que l'induction magnétique dans l'entrefer entre les pôles (18) de l'aimant (12) est égale ou supérieure à un tesla (dix Kgauss).

3. Dispositif selon la revendication 1, caractérisé en ce que la sonde réceptrice (32) peut être appuyée sous l'effet d'un ressort sur la surface de l'objet considéré (10) à vérifier.

4. Dispositif selon la revendication 1, caractérisé en ce que, au moins la sonde réceptrice (32) peut être réglée sous la précontrainte d'un ressort à une petite distance de la surface de l'objet (10).

5. Dispositif selon la revendication 2, caractérisé en ce que, au moins la sonde réceptrice (32) est fixée aux extrémités de deux barres-supports (34) croisées en forme de ciseaux dont les autres extrémités sont reliées à un chariot (47) déplaçable longitudinalement à l'aide d'un guidage (53), et en ce qu'une extrémité d'une des barres-supports (34) est montée pivotante sur le chariot (47), tandis que l'extrémité correspondante de l'autre barre-support (34) est disposée mobile sur le chariot en direction longitudinale de celui-ci et est soumise à la tension d'un ressort dirigé vers la première barre-support.

6. Dispositif selon la revendication 5, caractérisé en ce que, une butée (54) réglable à des distances différentes de l'extrémités de l'autre barre-support est disposée sur le parcours de déplacement de l'extrémité de la barre-support (34).

7. Dispositif selon la revendication 1, caractérisé en ce que, il est prévu comme aimant (12) un électro-aimant qui présente deux branches (18) reliées entre elles par une culasse (16), et en ce que l'insertion de couches entre la culasse et les branches permet de régler la distance entre les pôles et la surface des objets considérés (10).

**Claims**

1. An apparatus for performing non-destructive testing of electroconductive objects (10) by electrodynamically generated ultrasonic waves with a magnet (12) generating a stationary magnetic field and with the poles of said magnet being opposite to each of two surfaces of the object to be tested which are located on two opposing sides of the object, where a transmitting probe (30) is arranged between the one pole and one of the two surfaces and a receiving probe (32) is arranged between the other pole and the other surface, characterized in that the magnet generates a constant magnetic field strength in the object during testing, that the transmitting and receiving probe (30, 32) have a small, constant or almost constant distance to the respective surface of the object (10), that said transmitting and receiving probes are arranged in holding devices (26, 28), by means of which they are movable oscillatorily over the surfaces of the object (10), and that a flaw detector (44) and a wall thickness measuring instrument (42) for generating an output signal proportional to the thickness of the wall are connected to the receiving probe (32), the output signal being fed to an adjustment circuit (46) by which a response threshold value of the flaw detector (44) can be varied depending on the thickness of the wall.

2. An apparatus according to claim 1, characterized in that the magnetic induction in the air gap between the poles (18) of the magnet (12) is equal to or larger than one Tesla (ten kGauß).

3. An apparatus according to claim 1, characterized in that at least the receiving probe (32) can be pressed against the surface of the object (10) to be tested respectively by means of resilience.

4. An apparatus according to claim 1, characterized in that at least the receiving probe (32) is adjustable under spring tension to a small distance to the surface of the object (10).

5. An apparatus according to claim 2, characterized in that at least the receiving probe (32) is fixed to the ends of X-crossed supporting bars (34), the other ends of which are connected to a displaceable carriage (47) travelling along a guide (53), where one of the supporting bars (34) with one end is swivellingly supported by the carriage (47), while the other supporting bar (34) with one of its ends is displaceably arranged in the carriage in a longitudinal direction and is affected by spring tension directed toward the first supporting bar.

6. An apparatus according to claim 5, characterized in that a stop (54) is arranged in the shifting path of the end of the supporting bar (34), the stop being adjustable to different distances to the end of the other supporting bar.

7. An apparatus according to claim 1, characterized in that an electromagnet is provided as magnet (12) having two legs (18) linked to each other with a yoke (16), where the distance between the poles and the surface of the respective objects (10) is adjustable by means of insertions between the yoke and the legs.

Fig.1

Fig.2

Fig.3

Fig.4

Fig.5